# EUROPEAN PATENT SPECIFICATION

(11) **EP 1 195 581 B1**
(45) Date of publication and mention of the grant of the patent: **03.11.2004**
(21) Application number: 01500224.9
(22) Date of filing: 06.09.2001
(51) Int. Cl.: G01D 5/347, G01B 5/00

(54) **Optical apparatus for measuring lengths with a fastening device**
Optischer Längenmessapparat mit einer Befestigungsvorrichtung
Appareil optique pour la mesure de longueurs, avec un dispositif de fixation

(30) Priority: 03.10.2000 ES 200002399
(43) Date of publication of application: 10.04.2002
(73) Proprietor: FAGOR, S.Coop., 20500 Mondragon (Gipuzkoa) (ES)
(72) Inventor: Barinaga Arambarri, Manuel, 20500 Mondragon (Gipuzkoa) (ES)
(74) Representative: Fernandez Guzman, Juan

(56) References cited:
- EP-A- 0 947 806
- EP-A- 1 111 346
- US-A- 4 139 315

## Description

The present invention relates to an optical apparatus for measuring the relative displacement between two objects, provided with an elongated scale support and with a fastening device to prevent deformation of the scale support as a result of thermal expansion.

### Prior art

Optical apparatus for the measurement of large linear displacements, in a machine tool for instance, have an optical scanning unit, shifting with the mobile object of the machine, and a long scale graduated on a strip of transparent glass, which is housed in a hollow support made with an aluminium profile. The scale support is attached to an immobile part of the machine and houses whiten hollow optical measuring means whose distance setting to the measuring scale is decisive to achieve the accuracy of the measurement. The variations in the temperatures in the machine cause a greater linear thermal expansion of the aluminium support than of the steel base of the machine. Rigid attachment of the aluminium profile would give rise to the buckling of the scale support. To overcome this problem, optical apparatus with a scale support made of elongated aluminium profile either have additional elements for compensating the elongation of the scale support or fastening devices that permit elongation.

A known device for the attachment of a scale support made of aluminium to the machine is described in EP-736750-A. The scale support is made starting from an aluminium profile, which has a perforated side edge with a series of holes spaced at equal distances apart for screwing the scale support to the steel base of the machine. The holes for fastening the scale support are also used for marking through them, with a hand drill, the centres of the corresponding tapped fastening holes in the base of the machine. In the known device, the profiled fastening edge, on either side of its attach holes, has a transverse groove machined, open to the exterior, which dilates with the thermal expansion, so that the support does not bend. The effect produced by the open grooves dilated by the thermal expansion of the scale support is not sufficient to prevent deformation as the support part between two attach screws tends to bend.

EP A 0 947 806 also discloses a scale support system and its fastening means.

### Disclosure of the invention

The object of the present invention is an optical apparatus for measuring large linear displacement as defined in claim 1.

The optical apparatus according to the invention may be of the type that comprises a mobile optical scanning unit, which moves in the direction of measurement, and an immobile elongated measuring unit with a scale within a scale support made of hollow aluminium profile. The scale support is secured for instance to a steel base on a machine tool by means of a fastening device on every one of the screwdown holes drilled in the steel base at regular intervals of length. The fastening device permits the thermal expansion of the scale support on the steel base in order to prevent flexural stresses in the glass strip carrying the measuring scale.

The fastening device comprises an assembly bushing which is inserted in each one of the attach holes in the scale support, while it has a centre hole itself for the clamp screw, anchoring the scale support rigidly in the direction transverse to the measuring direction, thereby only permitting elongation due to thermal expansion.

The fastening device facilitates the prior marking of the centres of the threaded holes in the steel base, with the measuring apparatus placed on it.

### Description of the drawings

FIG. 1 is a sectional elevation view of the optical measuring apparatus according to the invention, showing the scale support and its fastening device on an immobile base of a machine, in successive installation steps a), b), c).
FIG. 2 is a partial plan view of the scale support in figure 1.
FIG. 3 is a partial sectional view of the fastening device set in place according to figure 1 c).

### Preferred embodiment of the invention

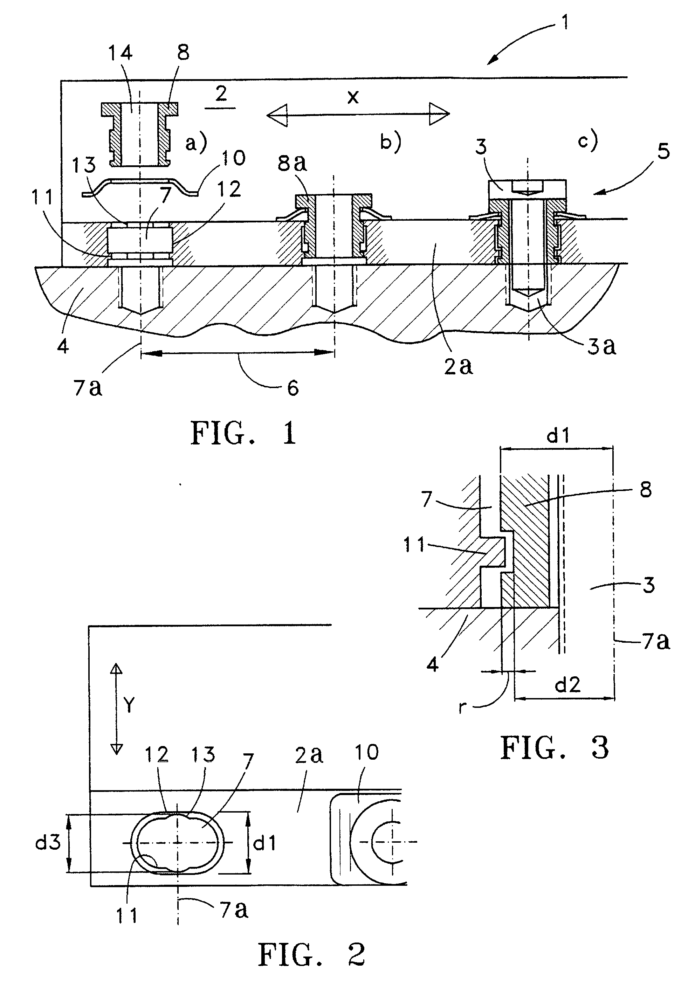

In reference to the figures 1-3, an optical apparatus 1 according to the invention comprises a measuring unit associated with an immobile object, which includes a length measuring scale, not represented in the drawings, a scale support 2 made from a box-section hollow aluminium profile housing the measuring scale and extended in the direction "X" of the linear displacement to be measured, and a plurality of devices 5 for fastening the scale support 2 mounted on the latter for its attachment to the immobile object, such as a steel base 4 of a machine tool. The scale support 2 has a straight laterally protruding edge 2a, which rests on the immobile base 4 and is secured to it by a plurality of fixing screws 3 that pass through every fastening device 5, at a series of points 7a corresponding to a series of tapped holes 3a in the immobile base 4 at regular intervals 6 apart.

The fastening device 5 comprises a series of oval-profiled through-holes 7, machined in a side edge 2a of the scale support in the manner of a clamping buttonhole at the same intervals 6 of length as the tapped holes 3a, a cylindrical body assembly bushing 8 made of steel, which is inserted in each oval hole 7, and a spring strip 10 interposed between an outer head 8a of the bushing and the aluminium side edge 2a. The bushing 8 has a centre hole 14 traversed by a fixing screw 3. Once the bushings 8 are in place on the respective oval holes 7, the bushing centre hole 8 is used as a guide for marking the tapping centres 7a of the holes 3a in the base 4.

The bushing 8 has an outside diameter referenced as d1 and presents two peripheral annular grooves of a diameter referenced as d2, at differing heights. The oval hole 7 has an inner outline 12 whose width according to a smaller axis in the transverse direction "Y" is of such a measurement, referenced also as d1, that the bushing 8 is a sliding fit in it, while its larger measurement, according to an axis in the length direction "X" is substantially larger than the width according to the smaller axis, in order to leave a degree of freedom between both surfaces of the bushing 8 and the oval hole 7 in direction "X" for the elongation of the aluminium support 2. The oval hole 7 in the transverse direction "Y" (fig. 1a and 3) has a diameter, referenced in fig. 2 as d3, machined all the way down to the bottom for press-fitting the bushing 8, by means of two circular sectors 13 at the ends of the smaller axis, with the result that the bushing 8 is tight in the oval hole 7 in order to eliminate mobility in the scale support (2) in the transverse direction "Y".

At an initial mounting step (fig. 1 b) of the fastening device 5, the bushing 8 is partly pressed into the oval hole 7, to an extent governed by the spring strip 10. The centre hole 14 guides the bit for marking the tapping centres 7a in the mobile base 4. The bushing 8 is pressed in fully (fig. 1c) by tightening the screw 3 until it comes up against the surface of the base 4. The oval hole 7 has two internal radial threads 11 projecting from its inner surface, which secure the bushing 8 partly pressed into the oval hole 7 at an intermediate step of fitting (fig. 1b), and at the final step, when the bushing 8 is fully pressed in, they face up against a respective annular groove d2 in the bushing 8. Thus, due to the temperature variation the aluminium scale support may undergo expansion travel in the direction X of a maximum value equal to the radial depth "r" (fig. 3) of the groove d2 in the bushing 8, which is the space available for the advance of the thread 11 in the oval hole 7.

In one example of the preferred embodiment, the measuring scale has a length of up to 3 m, the aluminium scale support may expand due to temperature 25 µm/m, whereas the immobile steel base 4 does so 10 µm/m. The length interval 6 between the two centres of the fastening devices 5 is around 10 cm. The degree of freedom of the aluminium support 2 for its thermal expansion in direction X at each fastening centre 7a is ± 1 mm.

## Claims

1. Optical apparatus for measuring large linear displacements, comprising a measuring unit associated with an immobile base (4) which includes a measuring scale, a scale support (2) made out of a hollow aluminium profile housing the scale, extended in the direction "X" of the displacement, a series of attaching through-holes (7) in the scale support (2), and a plurality of fastening devices (5) for securing the scale support (2) to the immobile base (4), by means of a series of spaced screws (3), **characterised in that** each of the fastening devices (5) comprises one hole of the said series of attaching holes (7) machined in the form of an oval-profiled through-hole, an assembly bushing (8) provided with difference inner outline areas and a centre hole for the passage of a fixing screw (3), said assembly bushing (8) being inserted in each oval hole (7) tightly fitted on the smaller diameter (13) of the latter, for the blocking of the scale support in the transverse direction "Y", and the irregular periphery (8a,d1,d2) of the assembly bushing (8) cooperating with inner areas (11,12,13) in the oval hole, to leave a freedom for the thermal expansion of the scale support (2) in the direction "X" of displacement.

2. The optical apparatus for measuring according to claim 1, **characterised in that** said inner areas (11,12,13) in the oval hole comprise at least a radial protruding area (11), and the irregular periphery of the bushing (8) comprises at least an annular groove (d2) of a given depth (r) receiving the protruding area (11), to allow for the linear thermal expansion of the scale support (2).

## Patentansprüche

1. Optisches Gerät für die Messung grosser linearer Verschiebungen, umfassend eine mit einem unbeweglichen Sockel (4) verbundene Messeinheit, die eine Messkala enthält, einen Skalenhalter (2) aus hohlem Aluminiumprofil, der die Skala aufnimmt und sich in Richtung "X" der Verschiebung erstreckt, eine Reihe von durchgehenden Befestigungslöchern (7) im Skalenhalter (2) und eine Vielzahl von Vorrichtungen (5) zur Befestigung des Skalenhalters (2) am unbeweglichen Sockel (4) mit Hilfe einer Reihe von Abstandsschrauben (3), **dadurch gekennzeichnet, dass** jede einzelne der Befestigungsvorrichtungen (5) eins der durchgehenden Löcher (7), welche mechanisch in Form eines ovalen Loches eingearbeitet wurden, eine Montagebuchse (8) mit verschiedenen Konturen der inneren Bereiche und ein mittleres Loch (14) für den Durchgang der Befestigungsschraube (3) besitzt, während diese Montagebuchse (8) in die einzelnen ovalen Löcher (7) fest in einen kleineren Durchmesser (13) derselben eingesetzt wird, um den Skalenhalter (2) in seiner Querrichtung "Y" zu blockieren, und der unregelmässige Umfang (8a,d1,d2) der Montagebuchse (8) mit den inneren Bereichen (11,12,13) des ovalen Loches mit dem Ziel zusammenwirkt, einen Freiheitsgrad für die Wärmedehnung des Skalenhalters (2) in "X"-Richtung der Verschiebung zu ermöglichen.

2. Optisches Messgerät nach Anspruch 1, **dadurch gekennzeichnet, dass** die mechanisch bearbeitete Innenbereichen (11, 12, 13) des ovalen Loches (7) mindestens einen Bereich (11) umfasst, der in Richtung zur Mitte vorsteht, und dass der unregelmässige Umfang der Buchse (8) zumindest eine ringförmige Einkehlung (d2) gewisser radialer Tiefe (r) besitzt, welche diesen vorstehenden Bereich (11) aufnimmt und die thermische Ausdehnung des Skalenhalters (2) zulässt.

## Revendications

1. Appareil optique pour la mesure de grands déplacements linéaires, comprenant une unité de mesure associée à une base immobile (4) le quelle inclut une échelle de mesure, un support (2) d'échelle fait à partir d'un profilé d'aluminium creux logeant l'échelle, étendu dans la direction « X » du déplacement, une série de trous (7) traversants de fixation dans le support (2) d'échelle, et plusieurs dispositifs (5) de fixation pour la tenue du support (2) d'échelle à cette base immobile (4), au moyen d'une série de vis (3) espacées, **caractérisé en ce que** chacun des dispositifs (5) de fixation comprend un trou appartenant à ladite série de trous (7) de fixation usinés en forme d'un trou traversant à profil ovale, une douille (8) de montage pourvue de différents contours de zones internes et d'un trou central (14) pour le passage d'une vis (3) de fixation, ladite douille (8) de montage étant insérée dans chaque trou ovale (7) ajustée très serrée dans le plus petit diamètre (13) de ce dernier, pour le blocage du support (2) d'échelle dans sa direction « Y » transversale, et la périphérie (8a,d1,d2) irrégulière de la douille de montage (8) collaborant avec les zones internes (11,12,13) du trou ovale, pour laisser une liberté d'expansion thermique du support (2) d'échelle dans la direction « X » du déplacement.

2. L'appareil optique pour la mesure selon la revendication 1, **caractérisé en ce que** les zones internes (11,12,13) dans le trou ovale (7) comprend au moins une zone (11) saillante radiale et la périphérie irrégulière de la douille (8) comprend au moins une gorge annulaire (d2) d'une certaine profondeur (r) vers le centre recevant la zone (11) saillante qui permet l'expansion thermique du support (2) d'échelle.
